# FASCICULE DE BREVET EUROPEEN

(11) **EP 3 017 084 B1**
(45) Date de publication et mention de la délivrance du brevet: **03.05.2017**
(21) Numéro de dépôt: 14745207.2
(22) Date de dépôt: 03.07.2014
(51) Int. Cl.: C23C 24/04, C23C 4/02, C23C 4/073

(54) **PROCEDE DE PREPARATION A LA DEPOSE D'UN REVETEMENT METALLIQUE PAR PROJECTION THERMIQUE SUR UN SUBSTRAT**
VERFAHREN ZUR VORBEREITUNG DER ENTFERNUNG EINER METALLBESCHICHTUNG DURCH THERMISCHES SPRITZEN AUF EINEM SUBSTRAT
PROCESS FOR PREPARING FOR REMOVAL A METAL COATING BY THERMAL SPRAYING ON A SUBSTRATE

(30) Priorité: 03.07.2013 FR 1356490
(43) Date de publication de la demande: 11.05.2016
(73) Titulaire: Snecma, 75015 Paris (FR)
(72) Inventeur: DUDON, Laurent, Paul, F-77550 Moissy-Cramayel Cedex (FR); ARANTES, Antonio, Crémildo, F-77550 Moissy-Cramayel Cedex (FR)
(74) Mandataire: Urbain, Isabelle
(86) Numéro de dépôt international: PCT/FR2014/051707
(87) Numéro de publication internationale: WO 2015/001263

(56) Documents cités:
- EP-A1- 0 275 083
- WO-A1-87/04952
- WO-A1-2013/042635
- FR-A- 1 253 024
- US-A- 4 751 113
- US-A1- 2002 102 360
- US-A1- 2005 025 896

## Description

L'invention concerne un procédé de préparation à la dépose d'un revêtement métallique par projection thermique sur une zone à revêtir d'un substrat.

De façon plus précise, l'invention concerne des substrats particulièrement sensibles à l'échauffement ou d'une manière générale présentant une incompatibilité au dépôt d'une couche métallique en projection thermique.

En particulier, de façon non limitative, la présente invention porte sur le cas des substrats en composite à matrice organique (ou CMO). On peut également considérer notamment les substrats dans un alliage à base de magnésium ou encore un substrat réalisé en tout ou partie en matière organique tel que les matières plastiques.

Dans le domaine de l'aéronautique et plus particulièrement celui des turboréacteurs d'avion, diminuer la masse des éléments constitutifs du turboréacteur est une préoccupation constante.

Cette préoccupation a conduit au développement d'aubes de soufflante ou de redresseur dont les pales sont réalisées en matériau composite à matrice organique, de telles pales composites étant plus légères que les pales métalliques. Toutefois, le bord d'attaque de ces pales composites est trop sensible à l'érosion et aux chocs éventuels (oiseaux, graviers, glace, sable, etc.) pour être utilisé sans protection.

Il est nécessaire de protéger les pièces en CMO pour maintenir leur intégrité géométrique et physique et garantir leur durée de vie minimale. Il est connu de protéger ce bord d'attaque à l'aide :
- d'un profilé métallique de renfort, collé sur le bord,
- d'une peinture anti-érosion, appliquée sur le bord,
- d'un film métallique ou plastique anti-érosion, collé sur le bord, ou
- d'une combinaison des protections précitées.

Par exemple, on équipe l'extrémité d'un bord d'attaque d'aube en CMO, notamment d'aube de soufflante, avec un revêtement métallique.

Cette zone à revêtir s'apparente à une lame fine et ce d'autant plus que l'aube est petite peut être fortement endommagée par un revêtement de projection thermique métallique.

D'autres applications sont possibles, notamment un carter tel que le carter d'entrée du moteur situé autour de la soufflante, les aubes fixes de redresseur basse pression, et plus généralement pour toute pièce qui ne dépasse pas une température de 150°C.

Il est connu du document FR 2 978 931 de réaliser un revêtement de protection par projection thermique en compression, notamment pour contrecarrer le phénomène préalablement décrit précédemment de mise en traction du revêtement du fait du différentiel thermo-dilatométrique entre le revêtement et le substrat.

Quelle que soit la protection retenue, l'adhérence de celle-ci sur le bord d'attaque est un aspect essentiel : il est nécessaire que la protection adhère suffisamment au bord d'attaque pour encaisser les chocs sans se détacher et sans bouger par rapport à celui-ci, et pour répondre aux exigences de durée de vie en fonctionnement normal.

Les revêtements de projection thermique sont une technique répondant à cette nécessité. Cependant, sur les pièces CMO de formes complexes, la projection thermique présente plusieurs difficultés:
- L'adhérence du revêtement : Les pièces CMO sont composées majoritairement (> 70%) de fibres, notamment de fibres de carbone et minoritairement (< 30%) de résine, notamment de résine époxy. Inversement, du fait sa structure et de son mode de fabrication, la surface du CMO est plus largement composée de résine que de fibre de carbone, et si les revêtements de projection thermique adhèrent sur la fibre de carbone, ils adhèrent très mal sur la résine. En final, l'adhérence du revêtement sur CMO se réduit à la fibre de carbone présente en surface, soit au mieux sur 50% de la surface.
- L'effet thermique de la projection thermique sur le CMO : lors de la projection thermique la résine époxy se détériore sous l'effet de la chaleur engendrée par le métal fondu projeté ; il en est de même pour la fibre de carbone dans une moindre proportion. Ce défaut provient de la faible diffusivité thermique de la résine et du carbone.

Pour la projection thermique, la diffusivité thermique est vue comme la capacité d'un substrat à revêtir à évacuer ou à disperser plus ou moins rapidement les calories reçues, ici par la poudre fondue. Plus la diffusivité thermique est faible, plus la chaleur se concentre localement dans le substrat impacté; ce, au détriment de son intégrité. Cet effet thermique endommage la surface des substrats en CMO sur une profondeur de plusieurs 1/10 de mm. Pour des pièces de faible épaisseur (<2mm), ou de faible masse cet effet est amplifié est destructeur.
- Le différentiel dilatométrique : la projection thermique consiste à déposer un revêtement sur la surface d'une pièce par projection d'une poudre fondue. Lors du refroidissement, il se produit dans le revêtement une contraction thermo-dilatométrique supérieure à celle du substrat plus froid. Ce différentiel thermo-dilatométrique entre le revêtement et le substrat engendre des tensions mécaniques dans le revêtement qui alors est dit « en traction ». Ce phénomène qui dégrade l'adhérence du revêtement sur le susbtrat est d'autant plus important que les caractéristiques thermo-dilatométriques du revêtement et du substrat sont différentes. C'est le cas du substrat CMO qui a coefficient de dilatation thermique faible comparé au revêtement métallique qui a un coefficient de dilatation thermique moyen.

La présente invention a pour objectif de fournir un procédé permettant de surmonter les inconvénients de l'art antérieur et en particulier offrant la possibilité de déposer par projection thermique un revêtement métallique sur un substrat, notamment un substrat en CMO, avec une adhérence et une tenue améliorées.

A cet effet, selon la présente invention, le procédé est caractérisé en ce que l'on réalise les étapes suivantes :
a) on dépose une couche de colle sur la zone à revêtir avec une épaisseur homogène supérieure à 10 µm et inférieure à 100 µm,
b) avant que la colle ne soit sèche, on réalise une projection à froid d'une poudre métallique sur la zone à revêtir, ce par quoi les particules de poudre viennent se noyer au moins partiellement dans ladite couche de colle,
c) on fait sécher la colle dans laquelle lesdites particules de poudre restent emprisonnées, ce par quoi on forme une sous-couche apte à recevoir un revêtement métallique déposé par projection thermique.

De cette manière, on comprend que par la présence de la colle, on peut disposer à froid, c'est-à-dire à température ambiante, à la surface du substrat et sans aucun endommagement du substrat, dans une zone limitée à la zone à revêtir, des particules de poudre métalliques qui vont protéger le substrat lors d'une projection thermique ultérieure visant à déposer le revêtement métallique.

Ainsi, lorsque le substrat est en CMO, on dispose à froid, à la surface du substrat en CMO et sans aucun endommagement ni des fibres ni de la matrice du substrat, dans une zone limitée à la zone à revêtir, des particules de poudre métalliques qui vont protéger le substrat en CMO lors d'une projection thermique ultérieure visant à déposer le revêtement métallique à proprement parler.

La sous-couche est composée de particules de poudre métallique collées sur le substrat au lieu d'être fondues-projetées sur le substrat.

Globalement, grâce à la solution selon la présente invention, il est possible de réaliser à froid une sous-couche métallique d'adhérence.

Cette technique peut donc s'appliquer sur tous les substrats sur lesquels de la colle adhère.

De préférence, la colle est apte à sécher (ou durcir) à une température de moins de 100°C, et ce afin de ne pas endommager le substrat, en particulier en CMO lors de l'étape de séchage.

Cette solution présente aussi l'avantage supplémentaire, de permettre, en outre, grâce au choix de la composition de la poudre utilisée pour la sous-couche de réaliser un revêtement métallique parmi toute la gamme possible de matériaux pouvant être utilisés pour une protection contre l'usure et le frottement.

Parmi ces matériaux, et de façon non limitative, on peut citer les poudres métalliques suivantes : NiAl, NiCrAl, NiCrAlY, CuNiIn, CuAl alliage base Co type « Triballoy » (marque déposée) ou « Stellite » (marque déposée), les cermets type carbure WC-métal ou Cr₂C₃-métal, intégrant éventuellement des vernis lubrifiant (type métal-nitrure de bore, métal-graphite) dans une poudre unique ou bien un mélange de deux ou davantage de poudres.

L'adhérence ultérieure du revêtement obtenu par projection thermique sur la sous-couche encollée, dépend de différents paramètres parmi lesquels l'épaisseur de la couche de colle. Si celle-ci est trop épaisse, alors les particules de la poudre métallique sont recouvertes de colle et l'adhérence sera réduite car lors de la projection thermique le matériau fondu ne rencontre pas en premier les particules métalliques de la sous-couche.

La sous-couche est formée de particules de poudre métallique non fondues qui sont pour la très grande majorité d'entre elles:
- à moitié immergées dans de la colle coté substrat,
- à moitié émergées de la couche de colle de l'autre côté ; cette sous-couche étant ainsi prête à recevoir la couche de projection thermique,.

A cet effet, on comprend que la couche de colle doit présenter une épaisseur moindre que la taille des particules de poudre. Ainsi, de préférence, ladite couche de colle présente une épaisseur inférieure au diamètre moyen d₅₀ des particules de ladite poudre.

Si la concentration surfacique des particules de la poudre (ou du mélange de poudres) métallique est faible, alors l'adhérence est réduite d'autant.

La concentration surfacique est le nombre de particules par unité de surface. Si les particules métalliques sont espacées la concentration surfacique est faible. Si les particules métalliques sont côte à côte, la concentration surfacique est maximale. L'adhérence du revêtement postérieurement projeté dépend de cette concentration surfacique. Une forte adhérence réclame une concentration surfacique plutôt élevée, mais pas maximale, afin de laisser suffisamment de colle pour l'adhérence de la sous-couche encollée sur le substrat.

Ce paramètre est réglé par la distribution granulométrique de la poudre métallique par rapport à la fluidité de la colle utilisée.

Selon une disposition préférentielle, à l'issue de l'étape b), plus de 70% et moins de 95% de la surface de la zone à revêtir est recouverte de particules de poudre.

Selon une disposition préférentielle, à l'issue de la dépose de la colle à l'étape a), on dispose le substrat encollé dans un mélangeur ou un agitateur qui est mis en mouvement pour contrecarrer le fluage de la colle sur la zone à revêtir, ledit mouvement se poursuivant pendant l'étape b) de projection à froid et l'étape c) de séchage de la colle, pour être stoppé alors que la colle a durci.

Un tel mélangeur est par exemple un mélangeur dynamique tridimensionnel type « Turbula » (marque déposée).

De cette façon, on évite le fluage ou un écoulement de la colle et on maintient une épaisseur de colle régulière correspondant à l'épaisseur de colle lors de son dépôt.

De façon préférentielle, avant l'étape a), on réalise une étape a0) consistant à homogénéiser la rugosité de la surface du substrat dans la zone à revêtir, notamment par un sablage, et en particulier un sablage fin.

Grâce à une telle disposition, on facilite un encollage de l'étape a) plus régulier.

Selon une autre disposition préférentielle, à l'issue de l'étape c), on réalise une étape c') au cours de laquelle on réalise une finition de la sous-couche en retirant les particules de poudre non encollée. Ce retrait s'effectue par exemple par soufflage et/ou sablage.

Grâce à une telle disposition, on évite ou tout au moins on minimise la présence de particules de poudre non encollées, notamment coincées à la surface de la couche de colle, qui pourraient d'une part créer des surépaisseurs de la sous-couche et d'autre part engendrer des problèmes locaux d'adhérence du revêtement métallique déposé sur la sous-couche par projection thermique.

L'invention concerne également un procédé de protection contre l'usure d'un substrat selon lequel on met en oeuvre le procédé de préparation précédemment décrit et comportant en outre, après l'étape c), une étape d) au cours de laquelle on réalise un dépôt par projection thermique d'un revêtement métallique sur la sous-couche, ce par quoi on forme une couche de protection métallique sur le substrat.

Il s'agit de déposer cette couche de protection métallique soit directement sur la sous-couche, soit sur une couche intermédiaire recouvrant la sous-couche.

A titre d'exemple, cette couche intermédiaire peut correspondre à une seconde sous-couche métallique.

L'invention concerne également une pièce formée d'un substrat comportant un revêtement contre l'usure comportant :
- une sous-couche collée sur le substrat présentant des particules de poudre dans un matériau métallique qui sont au moins partiellement noyées dans une matrice en résine présentant une épaisseur supérieure à 10 µm, inférieure à 100 µm et inférieure au diamètre moyen d₅₀ des particules de ladite poudre;
- une couche de protection à l'usure, d'une épaisseur supérieure à 100 µm, continue et réalisée dans un matériau métallique.

On constate que la matrice en résine de la sous-couche d'une telle pièce présente une épaisseur du même ordre de grandeur que la taille des particules de poudre de la sous-couche, à savoir une épaisseur proche de la taille des particules de poudre, que l'on peut estimer par une épaisseur comprise entre 30% et 120%, de préférence entre 30% et 95%, et encore plus avantageusement entre 40% et 80% du diamètre moyen d₅₀ des particules de ladite poudre.

De manière préférentielle, l'invention porte sur une pièce dont le substrat est en composite à matrice organique.

Une telle pièce est notamment une pale en matériau composite à matrice organique ayant un bord d'attaque, ce bord d'attaque étant protégé par un renfort formé par un revêtement métallique déposé sur le bord d'attaque selon le procédé de protection défini précédemment.

Une telle pale est une pale d'aube de turbomachine, une pale d'hélicoptère ou d'hélice.

S'agissant de la colle, idéalement, son épaisseur doit être voisine de la moitié du diamètre moyen d₅₀ des particules de la poudre ultérieurement projetée à froid.

De préférence, la couche de colle présente une épaisseur supérieure à 10 µm et inférieure à 50 µm, cette épaisseur de la couche de colle étant de préférence comprise entre 20 et 40 µm.

Pour de la poudre présentant une granulométrie définie par d₁₀=45 µm et d₉₀=90 µm, cette épaisseur de colle est avantageusement de 30 µm environ.

La colle est déposée au pinceau, au tampon, au pistolet, ou par tout autre moyen permettant d'obtenir une couche d'épaisseur la plus régulière possible.

Avantageusement, ladite couche de colle est formée d'une colle époxyde comprenant une résine et un durcisseur mélangés entre eux avant l'étape a) de dépose de la colle.

Par suite, avant que la colle ne sèche, de la poudre métallique utilisée habituellement pour les sous-couches de projection thermique : NiAl, NiCrAl, NiCrAlY,...est projetée sur cette surface encollée.

Les particules de cette poudre forment alors sur la pièce/le substrat une couche métallique régulière et ce quelle que soit la forme complexe de la pièce puisque la poudre est projetée.

Parmi les techniques de projection à froid de la poudre de la sous-couche, on peut mentionner de manière non limitative une dépose manuelle, une projection au pistolet, au tampon et à l'aérographe....

Ainsi, on comprend que cette technique ne rencontre pas de limitation quant à la forme des zones à revêtir, si ce n'est par l'accessibilité de la zone à revêtir par le système de projection à froid de la poudre formant la sous-couche et le système de projection thermique de la poudre formant le revêtement de protection thermique final.

La pièce encollée de poudre métallique est mise à sécher suivant les spécifications de la colle. Pour les pièces CMO, on choisira une colle qui ne réclame pas un séchage à plus de 100°C.

Après séchage, la pièce en CMO se retrouve revêtue d'une sous-couche métallique rugueuse identique à une pièce sur laquelle on aurait déposé une sous-couche standard de projection thermique.

Dès lors, tout revêtement habituel de projection thermique peut-être déposé sur cette sous-couche.

Durant cette dernière opération, il faut refroidir la pièce en cours de projection selon les techniques habituelles afin d'éviter de dépasser les températures de dégradation du CMO et de la colle, et de préférence rester en deçà de 110°C, et/ou afin d'éviter d'introduire autant que faire ce peut des contraintes en traction favorisant le décollement du revêtement.

Parmi ces techniques de refroidissement, on peut citer la mise en place d'un refroidissement localisé proche de la zone en cours de projection thermique par l'une ou l'autre des techniques suivantes : un soufflage d'air en continu d'air froid ou de particules dé gaz carbonique liquide, ou d'azote liquide. On peut combiner ces techniques de refroidissement à une projection thermique de faible débit pour minimiser l'apport de chaleur au CMO par les particules de poudre fondues.

On comprend que l'étendue des revêtements métalliques pouvant être déposés sur la sous-couche encollée est liée à la tenue en température de la colle et que les techniques de refroidissement de la pièce combinées à une cinématique de projection thermique dite « froide » (vitesse de déplacement rapide, débit de poudre faible et application de pauses de projection pour éviter les surchauffes) permettent de déposer tous les type de revêtements.

Par ailleurs, l'adhérence de la couche de revêtement déposée par projection thermique sur la sous-couche est améliorée avec l'utilisation, pour la sous-couche, d'une poudre présentant des particules de forme irrégulière plutôt que proche de la forme sphérique. De plus, de telles formes irrégulières s'accrochent mieux dans la couche de colle.

De préférence, on choisit des poudres avec un facteur de sphéricité des particules qui est inférieur à 0.75, avantageusement inférieur à 0.70, et encore plus avantageusement inférieur à 0.65 avec une situation encore plus avantageuse lorsque ce facteur de sphéricité est inférieur à 0.60.

On entend par sphéricité, le facteur de sphéricité (un nombre sans dimension) tel que définie par Wadell comme suit : le rapport entre la surface de la sphère de même volume que la particule et la surface de la particule en question (ψᵥ), équivalent encore au carré du rapport entre le diamètre équivalent en volume et le diamètre équivalent en surface. Une valeur de 1 correspond à une sphère parfaite.

Avantageusement, toutes les particules de la poudre utilisée selon l'invention, présentent un facteur de forme compris entre 1.5 et 3. De préférence, ce facteur de forme est compris entre 1.6 et 2.5, avantageusement compris entre 1.7 et 2.3, et encore plus avantageusement compris entre 1.8 et 2.

Ce facteur de forme, qui donne une bonne indication de l'élancement des particules, est défini comme le rapport entre diamètre de Féret maximum (distance maximale entre deux tangentes parallèles à des côtés opposés de la particule) et le diamètre de Féret minimum (distance minimale entre deux tangentes parallèles à des côtés opposés de la particule). Ainsi, un facteur de forme de 1 correspond à une sphère et un facteur de forme de √2 correspond à un cube.

Dans le présent texte, le terme « particule » correspond à une entité physique isolée des autres entités physiques de la poudre considérée.

Parmi les différents types de poudre existants, on privilégie dans le cadre de la présente invention des poudres obtenues par atomisation à l'eau (« water atomised ») notamment à des poudres obtenues par atomisation gazeuse (« gas atomised »). En effet, les poudres obtenues par atomisation à l'eau (« water atomised ») sont formées de particules dont la forme est très irrégulière, plutôt élancée et éloignée de la forme d'une sphère. De telles poudres obtenues par atomisation à l'eau sont ainsi plus propices à l'adhésion par collage selon l'invention.

La pièce est maintenant prête à être revêtue par projection thermique standard, notamment par les technique de projection par chalumeau, par arc fil, par flamme supersonique (ou HVOF pour « High Velocity Oxy-Fuel ») ou par torches à plasma d'arc soufflé (APS pour « Atmosphérique Plasma Spraying », IPS pour « Inert Gas Plasma Spraying », LPPS pour « Low Pressure Plasma Spraying ») ou par projection à froid dite « Cold Spray » consistant à projeter à très grande vitesse une poudre chauffé uniquement par de l'air chaud ou un gaz chaud.

La surface étant métallique et rugueuse, n'importe quel revêtement est possible. On choisira pour une application anti-érosion du WC-Métal (ici du carbure de tungstène à liant cobalt). Une projection HP-HVOF permet par exemple de déposer le revêtement de WC-Métal en compression.

L'épaisseur du revêtement est typiquement comprise entre 0,5 et 20 mm.

Selon une disposition avantageuse, le revêtement métallique déposé par projection thermique est le même matériau que la poudre métallique projetée à froid pour former la sous-couche.

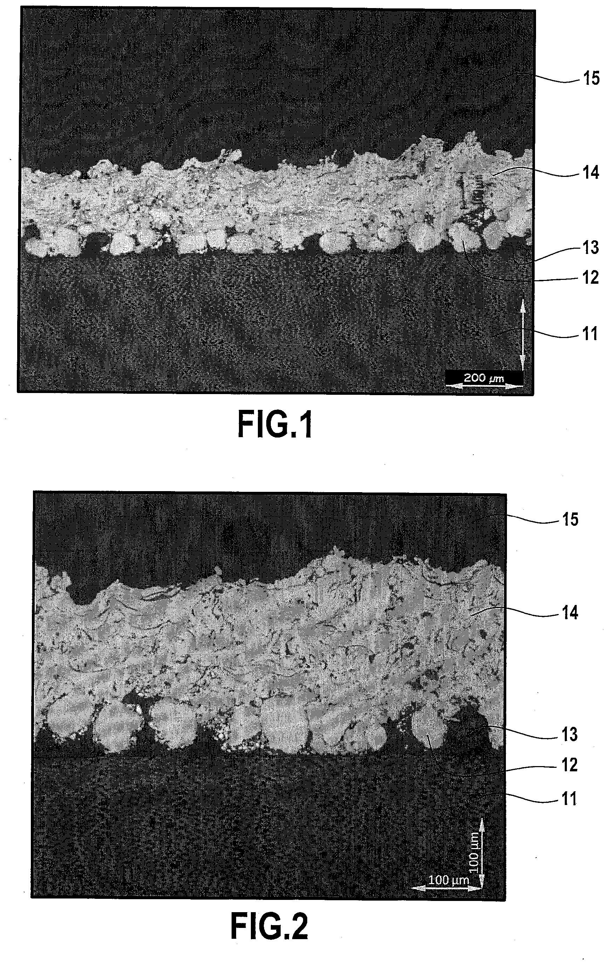

D'autres avantages et caractéristiques de l'invention ressortiront à la lecture de la description suivante faite à titre d'exemple et en référence aux dessins annexés dans lesquels les figures 1 et 2 sont des micrographies d'un revêtement de protection sur un substrat CMO, obtenu selon le procédé de l'invention.

A titre d'exemple, on décrit maintenant l'application du procédé selon l'invention pour réaliser un revêtement sur le bord d'attaque d'une aube de soufflante fabriquée par RTM (pour « Resin transfer Moulding »).

L'aube de soufflante RTM présente un bord d'attaque fin de forme complexe sur sa longueur. L'épaisseur du bord d'attaque ne dépasse pas les 2 mm. Constitué d'un composite (fibres de carbone tissées de façon tridimensionnelle et résine époxy injectée), le bord d'attaque de l'aube est sensible à l'érosion. Il est indispensable de protéger le bord d'attaque à l'aide d'un renfort anti-érosion. Actuellement ce renfort consiste en une pièce métallique de forme et collé sur le bord d'attaque. Coté intrados et extrados, elle enveloppe le bord d'attaque sur environ 40 mm. Si ce renfort en alliage Ti est relativement fin sur les parties intrados et extrados de l'aube, il est épais (entre 5 et 10 mm) en sommet car l'alliage Ti reste encore sensible à l'érosion, et une épaisseur de réserve est nécessaire.

L'application du procédé selon l'invention se déroule suivant les étapes suivantes :
- Dégraissage : La pièce est dégraissée
- Masquage avant encollage : Le masquage s'effectue à l'aide de ruban adhésif PVC utilisé aussi comme adhésif de protection de sablage. Il protège les zones qui ne doivent pas être encollées et revêtues.
- Sablage : Un sablage corindon (granulométrie 180 µm ou 300 µm) des zones à encoller est effectué. Cette préparation par sablage permet l'obtention d'une surface homogène du point de vue de sa rugosité, de sorte que la colle va s'étaler régulièrement sur cette surface (on recherche une rugosité Ra comprise entre 0.8 µm et 5 µm).
- Dépose de la colle : pour cette application, on a utilisé la résine-colle époxy « Spécifix de STRUERS ». La résine-colle est préparée par le mélange de la résine « Specifix Resin » et de son agent durcissant « Specifix-40 Curing Agent ».

A l'aide d'un pinceau, la préparation est étalée en fine couche sur la zone à encoller de l'aube (zone à revêtir). Un colorant fluorescent peut être introduit dans la résine qui révèlera visuellement, sous lampe UV, par contraste de couleur, la régularité d'épaisseur. Idéalement, la résine peut être déposée à l'aide d'un pistolet monté sur robot afin d'obtenir une meilleure reproductibilité. L'épaisseur de résine-colle déposée est d'environ 30 µm. Si l'épaisseur est suffisamment fine la résine-colle ne doit pas fluer. Enfin, la poudre est déposée manuellement ou au pistolet sur la zone encollée.

Afin d'éviter les effets de coulures et/ou le fluage de la résine-colle par gravité, l'aube est fixée sur une machine qui lui imprime un mouvement contrecarrant cet effet, du type mélangeur ou agitateur. Dans notre exemple, il s'agit d'un mélangeur dynamique tridimensionnel constitué d'une machine type «Turbula» (marque déposée) déviée de sa fonction première. Le mouvement tridimensionnel généré par la machine ainsi que la vitesse du mouvement sont tels qu'ils empêchent la résine-colle de fluer.

La poudre est projetée alors que la pièce est en mouvement dans cette machine à l'aide d'un pistolet lui-même porté par un robot. En l'occurrence, c'est le pistolet du robot de projection thermique, mais avec sa source de chaleur désactivée.
- Polymérisation ou durcissement de la résine-colle : La résine-colle choisie durcit en 1 heure dans une ambiance à 90°C ou 3h dans un ambiance à 50°C.

Idéalement, l'aube reste en mouvement, ici dans la même machine, au moins le temps que la résine soit suffisamment polymérisée pour ne plus fluer.
- Finition par soufflage ou sablage : La sous-couche métallique encollée est débarrassée des excès de poudre non adhérente par un soufflage voire un sablage au corindon fin (50µm).
- Démasquage et contrôle visuel : La pièce est démasquée et visuellement contrôlée en aspect. L'aspect doit montrer un dépôt régulier en épaisseur, sans variation de couleur et sans manques locaux de sous-couche encollée.

Les revêtements réalisés suivant cette technique sont testés en tenue à l'adhérence suivant la norme l'ASTM C333 dite « la technique du pion collé ».

Des tests ont été menés sur pions métalliques avec une sous-couche préencollée de poudre de NiAl (Ni185 de la société Praxair) et une couche de revêtement métallique de NiAl de même composition déposée par le procédé de torche à plasma d'arc soufflé. Les valeurs d'adhérence mesurées sont d'environ 20MPa.

Si l'on se reporte aux figures 1 et 2, on peut voir les différentes couches :
- substrat 11 en CMO, à savoir des fibres de carbone (visibles en section, de couleur claire) enrobées de résine époxy (plus foncée),
- sous-couche placée juste dessus le substrat 11 : cette sous-couche encollée est constituée ici d'une seule couche 12 de particules de poudre NiAl noyées pour moitié dans la résine-colle 13. A droite (figure 1 et figure 2, à l'emplacement de la flèche signalent la résine-colle 13), une particule de poudre a été arrachée lors du polissage,
- la couche de revêtement 14 de NiAl projetée à la torche à plasma d'arc soufflé sur la sous-couche et ayant une épaisseur de 0.2 mm, et
- une couche 15 de résine d'enrobage recouvrant la de revêtement 14 pour le polissage ultérieur de la couche de revêtement 14.

Plus précisément, sur la figure 1, la sous-couche encollée est réglée pour être d'une épaisseur d'une couche de particules de poudre. Ce réglage est lié à l'épaisseur de résine colle préalablement déposée. Des particules de NiAl (type Ni185 de marque Praxair) ont été arrachées lors du polissage

## Revendications

1. Procédé de préparation à la dépose d'un revêtement métallique par projection thermique sur une zone à revêtir d'un substrat, **caractérisé en ce que** l'on réalise les étapes suivantes :
a) on dépose une couche de colle sur la zone à revêtir avec une épaisseur homogène supérieure à 10 µm et inférieure à 100 µm,
b) avant que la colle ne soit sèche, on réalise une projection à froid d'une poudre métallique sur la zone à revêtir, ce par quoi les particules de poudre viennent se noyer au moins partiellement dans ladite couche de colle,
c) on fait sécher la colle dans laquelle lesdites particules de poudre restent emprisonnées, ce par quoi on forme une sous-couche apte à recevoir un revêtement métallique déposé par projection thermique,
et **en ce qu'**à l'issue de la dépose de la colle à l'étape a), on dispose le substrat encollé dans un mélangeur ou un agitateur qui est mis en mouvement pour contrecarrer le fluage de la colle sur la zone à revêtir, ledit mouvement se poursuivant pendant l'étape b) et l'étape c) pour être stoppé alors que la colle a durci.

2. Procédé selon la revendication précédente, **caractérisé en ce que** la couche de colle présente une épaisseur supérieure à 10 µm et inférieure à 50 µm.

3. Procédé selon l'une des revendications 1 et 2, **caractérisé en ce que** ladite couche de colle présente une épaisseur inférieure au diamètre moyen d₅₀ des particules de ladite poudre.

4. Procédé selon l'une des revendications précédentes, **caractérisé en ce que** ladite couche de colle est formée d'une colle époxyde comprenant une résine et un durcisseur mélangés entre eux avant l'étape a).

5. Procédé selon l'une des revendications précédentes, **caractérisé en ce qu'**à l'issue de l'étape b), plus de 70% et moins de 95% de la surface de la zone à revêtir est recouverte de particules de poudre.

6. Procédé selon l'une quelconque des revendications précédentes, **caractérisé en ce qu'**avant l'étape a), on réalise une étape a0) consistant à homogénéiser la rugosité de la surface du substrat dans la zone à revêtir, notamment par un sablage.

7. Procédé selon l'une quelconque des revendications précédentes, **caractérisé en ce qu'**à l'issue de l'étape c), on réalise une étape c') au cours de laquelle on réalise une finition de la sous-couche en retirant les particules de poudre non encollée.

8. Procédé de protection contre l'usure d'un substrat en composite à matrice organique selon lequel on met en oeuvre le procédé de préparation selon l'une quelconque des revendications précédentes et comportant en outre, après l'étape c), une étape d) au cours de laquelle on réalise un dépôt par projection thermique d'un revêtement métallique sur la sous-couche, ce par quoi on forme une couche de protection métallique sur le substrat.

## Patentansprüche

1. Verfahren zur Vorbereitung auf das Abscheiden einer Metallbeschichtung durch thermisches Spritzen auf einem zu beschichtenden Bereich eines Substrats, **dadurch gekennzeichnet, dass** die folgenden Schritte durchgeführt werden:
a) auf dem zu beschichtenden Bereich wird eine Kleberschicht mit einer homogenen Dicke von mehr als 10 µm und weniger als 100 µm abgeschieden,
b) bevor der Kleber trocken ist, wird ein Kaltspritzen eines Metallpulvers auf den zu beschichtenden Bereich vollzogen, wodurch die Pulverteilchen sich wenigstens teilweise in die Kleberschicht einbetten,
c) der Kleber, in dem die Pulverteilchen eingeschlossen bleiben, wird getrocknet, wodurch eine Unterschicht gebildet wird, die geeignet ist, eine durch thermisches Spritzen abgeschiedene Metallbeschichtung aufzunehmen,
und dass am Ende des Abscheidens des Klebers bei Schritt a) das mit Kleber beschichtete Substrat in einem Mischer oder einem Rührer angeordnet wird, der in Bewegung versetzt wird, um dem Fließen des Klebers auf dem zu beschichtenden Bereich entgegenzuwirken, wobei die Bewegung während des Schrittes b) und Schrittes c) fortgesetzt wird, um gestoppt zu werden, während der Kleber ausgehärtet ist.

2. Verfahren nach dem vorhergehenden Anspruch, **dadurch gekennzeichnet, dass** die Kleberschicht eine Dicke von mehr als 10 µm und weniger als 50 µm aufweist.

3. Verfahren nach einem der Ansprüche 1 und 2, **dadurch gekennzeichnet, dass** die Kleberschicht eine Dicke aufweist, die geringer als der mittlere Durchmesser d₅₀ der Teilchen des Pulvers ist.

4. Verfahren nach einem der vorhergehenden Ansprüche, **dadurch gekennzeichnet, dass** die Kleberschicht von einem Epoxidkleber, der ein Harz und einen Härter, welche vor Schritt a) miteinander vermischt werden, umfasst, gebildet ist.

5. Verfahren nach einem der vorhergehenden Ansprüche, **dadurch gekennzeichnet, dass** am Ende des Schrittes b) mehr als 70 % und weniger als 95 % der Oberfläche des zu beschichtenden Bereiches mit Pulverteilchen bedeckt ist.

6. Verfahren nach einem der vorhergehenden Ansprüche, **dadurch gekennzeichnet, dass** vor Schritt a) ein Schritt a0) durchgeführt wird, der darin besteht, die Rauheit der Oberfläche des Substrats in dem zu beschichtenden Bereich, insbesondere durch ein Sandstrahlen homogen zu machen.

7. Verfahren nach einem der vorhergehenden Ansprüche, **dadurch gekennzeichnet, dass** am Ende des Schrittes c) ein Schritt c') durchgeführt wird, im Laufe dessen eine Endbearbeitung der Unterschicht durch Entfernen der nicht mit Kleber überzogenen Pulverteilchen durchgeführt wird.

8. Verfahren zum Schutz eines Substrats aus Verbundwerkstoff mit organischer Matrix vor Verschleiß, wonach das Vorbereitungsverfahren nach einem der vorhergehenden Ansprüche und ferner umfassend, nach Schritt c), einen Schritt d) durchgeführt wird, im Laufe dessen ein Abscheiden einer Metallbeschichtung durch thermisches Spritzen auf der Unterschicht durchgeführt wird, wodurch eine metallische Schutzschicht auf dem Substrat ausgebildet wird.

## Claims

1. A preparation method for preparing a zone to be coated of a substrate to receive a metal coating by thermal spraying, **characterized in that** the following steps are performed:
a) depositing a layer of adhesive on the zone to be coated, the layer having a uniform thickness greater than 10 µm and less than 100 µm;
b) before the adhesive dries, cold spraying a metal powder onto the zone to be coated, so that powder particles become embedded at least in part in said layer of adhesive; and
c) drying the adhesive in which said powder particles remain held captive, thereby forming an undercoat suitable for receiving a metal coating deposited by thermal spraying;
and **in that**, after depositing the adhesive in step a), the substrate with the adhesive applied thereto is placed in a mixer or a stirrer that is set into motion to counter the adhesive creeping over the zone to be coated, said movement being continued during step b) and step c) and being stopped once the adhesive has cured.

2. A method according to the preceding claim, **characterized in that** the layer of adhesive presents a thickness greater than 10 µm and less than 50 µm.

3. A method according to claim 1 or claim 2, **characterized in that** said layer of adhesive presents a thickness less than the mean diameter d₅₀ of the particles of said powder.

4. A method according to any preceding claim, **characterized in that** said layer of adhesive is formed by an epoxy adhesive comprising a resin and a curing agent mixed together prior to step a).

5. A method according to any preceding claim, **characterized in that** at the end of step b), more than 70% and less than 95% of the surface area of the zone to be coated is covered in powder particles.

6. A method according to any preceding claim, **characterized in that** prior to step a), a step a0) is performed consisting in making the roughness of the surface of the substrate uniform in the zone to be coated, in particular by sandblasting.

7. A method according to any preceding claim, **characterized in that** at the end of step c), a step c') is performed during which the undercoat is subjected to finishing by removing non-glued powder particles.

8. A method of protecting a substrate made of organic matrix composite material against wear, wherein the preparation method according to any preceding claim is performed and further including, after step c), a step d) during which a metal coating is deposited on the undercoat by thermal spraying, thereby forming a metal protective layer on the substrate.
